# EUROPÄISCHE PATENTANMELDUNG

(11) **EP 2 172 672 A1**
(43) Veröffentlichungstag der Anmeldung: **07.04.2010**
(21) Anmeldenummer: 08290932.6
(22) Anmeldetag: 02.10.2008
(51) Int. Cl.: F16H 25/20

(54) **Getriebevorrichtung zur Verbindung einer motorischen Antriebseinheit mit einem Hubzylinder Verfahren zur Verbindung einer motorischen Antriebseinheit mit einem Hubzylinder und Nahrungsmittelbehandlungsgerät**

(71) Anmelder: Rational AG, 86899 Landsberg/Lech (DE); FRIMA S.A., 68271 Wittenheim Cedex (FR)
(72) Erfinder: Thiébaud, Fabrice, Dr., 67600 Kintzheim (FR); Dirk, Mintz, 79189 Bad Krozingen (DE); Wassmus, Reinhard, 79395 Neuenburg a. Rhein (DE); Lingenheil, Markus, 79206 Breisach/Oberrimsingen (DE)
(74) Vertreter: Weber-Bruls, Dorothée

(57) **Zusammenfassung**

Die vorliegenden Erfindung betrifft eine Getriebevorrichtung zur Verbindung einer motorischen Antriebseinheit mit zumindest einem Hubzylinder, umfassend zumindest eine drehmitnahmesicher mit der motorischen Antriebseinheit in Wirkverbindung stehende Antriebswelle und zumindest eine Übemagungsvorrichtung zur Umwandlung einer Drehbewegung der Antriebswelle in eine Hubbewegung des Hubzylinders, wobei die Übertragungsvorrichtung zumindest ein konzentrisch zu der Antriebswelle angeordnetes erstes Übertragungselement umfasst und das erste Übertragungselement entlang einer Längsachse der Antriebswelle bewegbar gelagert ist, wobei ferner das erste Übertragungselement in zumindest einer ersten Position im Wesentlichen drehmitnahmesicher mit der Antriebswelle verbunden ist und in zumindest einer zweiten Position die drehmitnahmesichere Verbindung im Wesentlichen gelöst ist, und die Getriebevorrichtung zumindest ein Federelement umfasst, wobei das erste Übertragungselement mittels einer durch das Federelement aufgebauten Kraft in die erste Position zwingbar ist, sowie ein Verfahren zur automatischen wahlweisen Herstellung oder Lösung einer Verbindung zwischen einer motorischen Antriebseinheit und einem Hubzylinder als auch ein Nahrungsmittelbehandlungsgerät.

## Beschreibung

Die vorliegende Erfindung betrifft eine Getriebevorrichtung zur Verbindung einer motorischen Antriebseinheit mit zumindest einem Hubzylinder, umfassend zumindest eine drehmitnahmesicher mit der motorischen Antriebseinheit in Wirkverbindung stehende Antriebswelle und zumindest eine Übertragungsvorrichtung zur Umwandlung einer Drehbewegung der Antriebswelle in eine Hubbewegung des Hubzylinders, wobei die Übertragungsvorrichtung zumindest ein konzentrisch zu der Antriebswelle angeordnetes erstes Übertragungselement umfasst und das erste Übertragungselement entlang einer Längsachse der Antriebswelle bewegbar gelagert ist, ein Verfahren zur automatischen wahlweisen Herstellung oder Lösung einer Verbindung zwischen einer motorischen Antriebseinheit und einem Hubzylinder sowie ein Nahrungsmittelbehandlungsgerät.

Aus dem Stand der Technik sind Vorrichtungen bekannt, mittels denen über eine elektrische Antriebseinheit eine longitudinale Hubbewegung erzeugbar ist.

So offenbart die DE 68 06 663 U eine elektrische Hubeinheit, die eine Getriebevorrichtung umfasste. Eine Spindel wird über eine Achse eines elektrischen Motors in Drehung versetzt und über eine auf der Spindel angeordnete Gewindehülse wird die Drehbewegung der Spindel in eine Hubbewegung eines Hubzylinders umgewandelt. Die Gewindehülse wechselwirkt in entsprechenden Endpositionen des Hubzylinders mit Endschaltern, um ein Abschalten des Motors bei Erreichung der jeweiligen Endposition zu erzielen. Um darüber hinaus eine Überlastung des Motors zu vermeiden, sind zwischen der Motorachse und der Spindel Tellerfedern angeordnet, zwischen denen ein Antriebsteil angeordnet ist. Im Bereich des Antriebsteils sind Überlastschalter angeordnet, mittels denen bei einer Bewegung des Antriebsteils in Richtung einer Längsachse der Spindel ebenfalls eine Abschaltung des Motors erreicht wird.

Darüber hinaus offenbart die DE 68 06 662 U einen elektrischen Hubzylinder mit einer gattungsgemäßen Getriebevorrichtung. Mittels eines elektrischen Motors wird eine Antriebshülse über ein Planetengetriebe in Drehung versetzt, wobei eine Drehung der Antriebshülse derartig auf eine verdrehsicher gelagerte Antriebsspindel, die über ein Gewinde mit der Antriebshülse in Wirkverbindung steht, übertragen wird, dass eine Hubbewegung der Antriebsspindel erreicht wird. Um eine Überbelastung des Motors zu vermeiden, ist an der Außenfläche der Antriebshülse ein rotationssymmetrischer Ansatz vorhanden, der mit Schaltern derartig wechselwirkt, dass bei einer Überlastung des Motors oder bei Erreichen eines Endanschlags über die Endschalter der Elektromotor ausgeschaltet wird. Dazu ist die Antriebshülse über Tellerfedern relativ zu der Antriebsspindel bewegbar gelagert.

Nachteilig bei diesen aus dem Stand der Technik bekannten Antriebsvorrichtungen ist jedoch, dass für ein Anhalten einer Bewegung des Hubzylinders bzw. der Hubeinheit ein zusätzliches elektronisches System in Form der Endschalter bzw. Überlastungsschalter vorgesehen sein muss, um eine Überlastsituation zu detektieren und ein verlässliches Abschalten des Elektromotors in einem Überlastfall zu erreichen. Die Verwendung eines zusätzlichen elektrischen Systems führt jedoch zu einem komplizierten Aufbau und damit zu erhöhten Kosten und letztendlich zu einer erhöhten Fehleranfälligkeit des Antriebssystems.

Darüber hinaus kommt es zu einer zeitlichen Verzögerung zwischen dem Auftreten der Überlast und dem Abschalten des Motors, was zu einer Überbeanspruchung der Elemente der Getriebevonichtung führen kann. Insbesondere aufgrund einer kurzzeitigen Weiterbewegung des Elektromotors kann es zu einem schnellen Verschleiß der in der gattungsgemäßen Getriebevorrichtung verwendeten Spindel, insbesondere im Bereich des Gewindes kommen. Insbesondere bei Verwendung eines Planetengetriebes wird die Antriebshülse vergleichsweise schnell gedreht. Kommt es daraufhin zu einem Blockieren des Hubzylinders, insbesondere der über die Antriebshülse angetriebenen Antriebsspindel, so ergibt sich aufgrund der Last eine Bewegung der Antriebshülse, bis diese durch einen axialen Anschlag gestoppt wird und mittels des Endschalters ein Abschalten des Motors erreicht wird. Aufgrund des Restmoments und der Trägheit der Antriebshülse und des Planetengetriebes werden sich diese Elemente jedoch weiter radial bewegen und weiter Kräfte übertragen, so dass es zum Entstehen beträchtlicher Kräfte im Bereich zwischen der Antriebshülse und der blockierten Antriebsspindel kommt, und, da diese Kräfte abrupt mit recht hohen Werten auftreten, kommt es zu einem vergleichsweise starken Verschleiß.

Weiterhin können die in der Getriebevorrichtung herrschenden Kräfte unabhängig von der auf den Hubzylinder wirkenden Last deutlich variieren, so dass die Auslösekräfte, die zu einer Abschaltung des Motors führen müssen, sehr stark von den Reibverhältnissen in dem System abhängen und eine Anpassung der Auslösekräfte an die relativ stark schwankenden bzw. im Laufe des Lebenszyklusses des Antriebssystems sich verändernden Werte angepasst werden. Insbesondere der Reibwiderstand zwischen der Antriebshülse und der Antriebsspindel kann schwanken.

Es ist daher Aufgabe der vorliegenden Erfindung die gattungsgemäße Getriebevorrichtung derartig weiterzuentwickeln, dass die Nachteile des Stands der Technik überwunden werden, insbesondere eine Getriebevorrichtung bereitgestellt wird, in der auf den Einsatz eines zusätzlichen elektronischen Systems verzichtet werden kann, also insbesondere auf zusätzliche spezielle Sensorik und/oder Aktorik zum Detektieren einer Überlastsituation verzichtet werden kann, und gleichzeitig eine Getnebevomchtung bereitgestellt wird, die einen deutlich verringerten Verschleiß der verschiedenen Elemente der Vorrichtung aufweist und über die Lebensdauer der Getriebevorrichtung Fehlfunktionen vermieden werden.

Die die Getriebevorrichtung betreffende Aufgabe wird dadurch gelöst, dass das erste Übertragungselement in zumindest einer ersten Position im Wesentlichen drehmitnahmesicher mit der Antriebswelle verbunden ist und in zumindest einer zweiten Position die drehmitnahznesichere Verbindung im Wesentlichen gelöst ist, und die Getriebevorrichtung zumindest ein Federelement umfasst, wobei das erste Übertragungselement mittels einer durch das Federelement aufgebauten Kraft in die erste Position zwingbar ist.

Dabei kann insbesondere vorgesehen sein, dass die Übertragungsvorrichtung zumindest ein drehmitnahmesicher mit der Antriebswelle verbundenes, insbesondere mit der Antriebswelle verklebtes, verschweißtes, verschraubtes, kraftschlüssig verbundenes, formschlüssig verbundenes und/oder von der Antriebswelle umfasstes, zweites Übertragungselement umfasst.

Weiterhin kann ein erfindungsgemäße Getriebevorrichtung aufweisen zumindest eine mit dem ersten Übertragungselement in Wirkverbindung stehende, an dem ersten Übertragungselement ausgebildete und/oder von dem ersten Übertragungselement umfasste erste Kupplungsfläche und eine mit der Antriebswelle und/oder dem zweiten Übertragungselement in Wirkverbindung stehende, an der Antriebswelle und/oder dem zweiten Übertragungselement ausgebildete und/oder von der Antriebswelle und/oder dem zweiten Übertragungselement umfasste zweite Kupplungsfläche, wobei insbesondere die erste Kupplungsfläche und die zweite Kupplungsfläche komplementäre Oberflächenformen, Oberflächenkonturen und/oder Oberflächenneigungen aufweisen, vorzugsweise die erste Kupplungsfläche und/oder die zweite Kupplungsfläche zumindest bereichsweise im Wesentlichen senkrecht zu der Längsachse der Antriebswelle verläuft bzw. verlaufen und/oder zumindest bereichsweise geneigt relativ zu der Längsachse der Antriebswelle verläuft bzw. verlaufen und/oder eine im Wesentlichen konische, elliptische, kreissegmentförmige und/oder spiralförmige Oberflächenkontur aufweist bzw. aufweisen.

Dabei ist insbesondere bevorzugt, dass die erste Kupplungsfläche und die zweite Kupplungsfläche in der ersten Position des ersten Überhagungselements miteinander in Kontakt stehen und in der zweiten Position des ersten Übertragungselements voneinander beabstandet sind.

Mit der Erfindung wird dabei insbesondere vorgeschlagen, dass die erste Kupplungsfläche und/oder die zweite Kupplungsfläche eine gehärtete Oberfläche aufweist bzw. aufweisen, insbesondere die Oberfläche durch eine Beschichtung, vorzugsweise umfassend eine Keramik, eine, insbesondere polymere, Kunststoffverbindung und/oder eine kohlenstoffhaltige Verbindung, und/oder eine Randschichthärtung, vorzugsweise umfassend eine thermische Behandlung, eine Laserbehandlung, eine Nitrierhärtung und/oder induktives Härten, gehärtet ist.

Auch kann ein erfindungsgemäße Getriebevorrichtung gekennzeichnet sein durch zumindest eine zwischen der Antriebswelle und/oder dem zweiten Übertragungselement einerseits und dem ersten Übertragungselement andererseits angeordnetes Lagerelement, wobei das Lagerelement zumindest ein Gleitlager, Wälzlager, Kugellager, Walzenlager, Nadellager, Reiblager und/oder Rollenlager umfasst.

Weiterhin wird mit der Erfindung vorgeschlagen, dass das erste Übertragungselement zumindest eine erste Mitnahmevorrichtung für zumindest ein drittes Übemagungselement umfasste, insbesondere die Mitnahmevorrichtung zumindest ein auf einer Oberfläche des ersten Übertragungselementes zumindest bereichsweise ausgebildetes Außengewinde umfasst, vorzugsweise das erste Übertragungselement als Zylinderschnecke und/oder Schraubrad ausgebildet ist.

Bei der vorgenannten alternativen Ausführungsform ist besonders bevorzugt, dass mittels des dritten Übertragmigselements eine Drehbewegung des ersten Übertragungselementes in die Hubbewegung des Hubzylinders unzwandelbar ist, vorzugsweise das dritte Übertragungselement zumindest eine mit dem Hubzylinder in Wirkverbindung stehende, insbesondere relativ zu dem Hubzylinder verdrehsicher gelagerte, erste Gewindehülse umfasst,

Auch wird vorgeschlagen, dass das dritte Übertragungselement, insbesondere die Gewindehülse, direkt mittels der ersten Mitnahmevonichtung bewegbar ist und/oder eine Bewegung des ersten Übertragungselements mittels der ersten Mitnahmevorrichtung auf zumindest ein viertes Übertragungselement, insbesondere ein Schneckenrad, übertragbar ist und eine Bewegung des vierten Übertragungselements an das dritte Übertragungselement, insbesondere mittels einer mit dem vierten Übertragungselement in Wirkverbindung stehenden und/oder von dem vierten Übertragungselement umfassten zweiten Mitnahmevomichtung, übertragbar ist, wobei vorzugsweise eine Drehachse des vierten Übertragungselements senkrecht zu der Längsachse der Antriebswelle verläuft.

Weiterhin sieht die Erfindung vor, dass das Federelement sich auf einer ersten Seite, insbesondere unter Zwischenschaltung zumindest einer ersten Axiallagervorrichtung, an dem ersten Übertragungselement abstützt und sich an einer, insbesondere der ersten Seite gegenüberliegenden, zweiten Seite, vorzugsweise drehsicher, an zumindest einer von der Antriebswelle drehmechanisch entkoppelten Struktur der Getriebevorrichtung, insbesondere einem Gehäuse der Antriebseinheit, und/oder, insbesondere unter Zwischenschaltung zumindest einer zweiten Axiallagervorrichtung, an zumindest einem mit der Antriebswelle und/oder dem zweiten Übertragungselement in Wirkverbindung stehenden, vorzugsweise umfassten, ersten Widerlager abstützt und/oder das Federelement auf zumindest einer dritten Seite, insbesondere unter Zwischenschaltung zumindest einer dritten Axiallagervorrichtung, mit dem ersten Übertragungselement verbunden ist und auf einer, insbesondere der dritten Seite gegenüberliegenden, vierten Seite, vorzugsweise drehsicher, mit der von der Antriebswelle drehtnechanisch entkoppelten Struktur der Getriebevorrichtung, insbesondere dem Gehäuse der Antriebseinheit, und/oder, insbesondere unter Zwischenschaltung zumindest einer vierten Axiallagervorrichtung, mit zumindest einem mit der Antriebswelle und/oder dem zweiten Übertragungselement in Wirkverbindung stehenden, zweiten Widerlager verbunden ist.

Bei der letztgenannten Ausführungsform ist besonders bevorzugt, dass die erste Axiallagervorrichtung, die zweite Axiallagervorrichtung, die dritte Axiallagervorrichtung und/oder die vierte Axiallagervorrichtung zumindest ein Gleitlager, Wälzlager, Kugellager, Reiblager, Magnetlager, Nadellager, Rollenlager und/oder Walzenlager umfasst bzw- umfassen.

Auch ist bevorzugt, dass das erste übertragungselement mittels des Federelements in die erste Position ziehbar und/oder drückbar ist und/oder das Federelement zumindest eine Tellerfeder, zumindest eine Schraubenfeder, zumindest eine Schraubendruckfeder, zumindest eine Schraubenzugfeder, zumindest eine Druckfeder, zumindest eine Gummifeder, zumindest eine Elastomerfeder und/oder zumindest eine Hybridfeder umfasst.

Schließlich wird für die erfindungsgemäße Getriebevorrichtung vorgeschlagen, dass die motorische Antriebseinheit zumindest einen Elektromotor, zumindest eine pneumatische Antriebseinheit und/oder zumindest eine hydraulische Antriebseinheit umfasst.

Weiterhin wird ein Verfahren geliefert zur automatischen wahlweisen Herstellung oder Lösung einer Verbindung zwischen einer motorischen Antriebseinheit und einem Hubzylinder, insbesondere unter Einsatz einer erfindungsgemäßen Getriebevorrichtung, wobei eine Drehbewegung der motorischen Antriebseinheit auf zumindest eine drehmitnahmesicher mit der motorischen Antriebseinheit in Wirkverbindung stehenden Antriebswelle übertragen wird, die Drehbewegung mittels zumindest einer Übertragungsvorrichtung in eine Hubbewegung des Hubzylinders umgewandelt wird, ein konzentrisch zu der Antriebswelle angeordnetes und entlang einer Längsachse der Antriebwelle bewegbar gelagertes erstes Übertragungselement der Übertragungsvorrichtung in einer ersten Position im Wesentlichen drehmitnahmesicher mit der Antriebswelle verbunden wird, in zumindest einer zweiten Position des ersten Übertragungselements die drehmitnahmesichcre Verbindung im Wesentlichen gelöst wird, und das erste Übertragungselement mittels einer durch zumindest ein Federelement aufgebauten Kraft in seine erste Position gezwungen wird.

Dabei ist besonders bevorzugt, dass das erste Übertragungselement in die zweite Position bewegt wird, wenn eine durch den Hubzylinder auf die Übertragungsvorrichtung aufgebaute und/oder einer Bewegung der motorischen Antriebseinheit entgegenwirkende Gegenkraft einen Schwellenwert übersteigt, wobei der Schwellenwert, vorzugsweise durch eine Federkonstante des Federelements eingestellt wird.

Schließlich wird für das erfindungsgemäße Verfahren vorgeschlagen, dass in der ersten Position zumindest eine mit dem ersten Übertragungselement in Wirkverbindung stehende erste Kupplungsfläche mit zumindest einer mit der Antriebswelle und/oder einem zweiten Übertragungselement in Wirkverbindung stehenden zweiten Kupplungsfläche in Verbindung, insbesondere in direkten Kontakt, gebracht wird.

Auch wird vorgeschlagen, dass mittels des Hubzylinders zumindest ein Element und/oder eine Baugruppe eines Nahrungsmittelbehandlungsgeräts aktuiert wird.

Schließlich liefert die Erfindung ein Nahrungsmittelbehandlungsgerät, welches zumindest eine erfindungsgemäße Getriebevorrichtung aufweist.

Dabei ist besonders bevorzugt, dass das Nahrungsmittelbehandlungsgerät in Form zumindest eines Gargeräts, zumindest eines Standgargeräts, zumindest eines Kombidämpfers, zumindest eines Kesselgargeräts und/oder zumindest eines Tiegelgargeräts ausgebildet ist.

Schließlich wird für das erfindungsgemäß Nahrungsmittelbehandlungsgerät vorgeschlagen, dass mittels der Getriebevorrichtung zumindest eine Baugruppe des Nahrungsmittelbehandlungsgeräts, wie ein Tiegel, ein Tiegeldeckel und/oder eine Nahrungsmittelbehandlungsraumtür bewegbar ist.

Der Erfindung liegt somit die überraschende Erkenntnis zugrunde, dass eine Getriebevorrichtung zur Verbindung einer motorischen Antriebseinheit mit zumindest einem Hubzylinder derartig ausgebildet werden kann, dass eine rein mechanische Einkupplung/Auskupplung zwischen der motorischen Antriebseinheit und dem Hubzylinder erreicht wird, insbesondere eine zeitweise, vollständige Entkupplung der Antriebseinheit und des Hubzylinders, beispielsweise im Falle einer Überbelastung und/oder einer von außen auf den Hubzylinder wirkenden Kraft, erreicht wird, wobei die Auskupplung insbesondere sofort wirksam und sicher erfolgt, so dass eine Überbeanspruchung von Einzelelementen der Getriebevorrichtung vermieden und so ein Verschleiß der Elemente nicht auftreten kann, da insbesondere die Trägheit der Elemente und/oder ein Reibschluss zwischen den einzelnen Elementen, wie er insbesondere durch Fett oder Dichtungsvorrichtungen hervorgerufen wird, nicht zu einer Kraftübertragung zwischen den Einzelelementen führt. Je nach Anordnung des Federelements zu den Übertragungselementen kann die Kraftrichtung (Druck oder Zug) zum Einkuppeln bzw. Auskuppeln konstruktiv bestimmt werden.

Durch die Ausbildung entsprechender Lagervorrichtungen zwischen den Einzelelementen kann ferner vermieden werden, dass sich die Reibverhältnisse innerhalb der Getriebevorrichtung über die Betriebszeit verändern, so dass stets mit einer gleichen Auslösekraft für eine Einkupplung/Auskupplung gearbeitet werden kann bzw. von dieser ausgegangen werden kann. Insbesondere die aufgrund der Trägheit der Einzelelemente entstehenden Stoßbelastungen während einer Unterbrechung des Antriebs des Hubzylinders können durch die erfindungsgemäße Getriebevorrichtung vermieden werden.

Dabei ist die erfindungsgemäße **Getriebevorrichtung** insbesondere zur Verwendung in einem Nahrungsmittelbehandlungsgerät, wie einem Tiegelgargerät, geeignet. Beispielsweise werden mittels einer erfindungsgemäßen Getriebevorrichtung Baugruppen des Nahrungsmittelbehandlungsgeräts aktuiert, wie ein Tiegeldeckel und/oder ein Tiegel, so dass in den unterschiedlichen Bewegungsrichtungen des Hubzylinders unterschiedliche Belastungen auftreten. So ist beispielsweise bei einem Heben und Senken eines Deckels eines Tiegels während eines Hebens bzw. eines Öfinungsvorgangs eine maximale Kraft notwendig, um den Deckel anzuheben, während in einer Schließrichtung des Deckels jedoch lediglich die Baugruppe in Form des Deckels getragen werden muss, aber keine Zugkraft aufgewendet werden muss. Im Gegensatz zu aus dem Stand der Technik bekannten Getriebevorrichtungen erfolgt erfindungsgemäß eine Reaktion zur Auskupplung jedoch nicht erst, wenn übermäßige Kräfte in der Getriebevorrichtung entstehen, sondern bereits dann, wenn es zu einer geringen Bewegung des ersten Übertragungselements kommt.

Durch die erfindungsgemäße Getriebevorrichtung wird daher ein einfaches System ohne zusätzliche spezielle elektronische Teile, wie Sensorik oder Aktorik, bereitgestellt, um ein sehr zuverlässiges und konstruktiv einfach aufgebautes System bereitzustellen, dass sehr schnell auf eine Überbelastung oder eine von außen anliegende Kraft reagiert, da die sich zur Unterbindung einer weiteren Bewegung des Hubzylinders bewegenden Elemente eine vergleichsweise geringe Trägheit aufweisen und somit ohne einen erhöhten Kraftaufwand bewegbar sind und somit schnell zu einer verlässlichen, insbesondere mechanischen, Entkupplung des Hubzylinders von der motorischen Antriebseinheit führen. Da die in der erfindungsgemäßen Betriebsvorrichtung verwendeten Elemente grundsätzlich eine vergleichsweise hohe Lebensdauer aufweisen und zusätzlich Belastungssituationen, die zu einem vorzeitigen Verschleiß der Elemente führen könnten, vermieden werden, ergibt sich eine sehr hohe Lebensdauer der Getriebevorrichtung, was zu einer Kostenersparnis führt. So können weit mehr als 1500 Kupplungszyklen, beispielsweise 60.000 Kupplungszyklen, wartungsfrei durchgeführt werden.

Weitere Merkmale und Vorteile der Erfindung ergeben sich aus der nachfolgenden Beschreibung, in der verschiedene Ausführungsformen der Erfindung anhand von schematischen Zeichnungen beispielhaft erläutert sind. Dabei zeigt:
- Figur 1: eine seitliche Aufsicht auf eine erste Ausführungsform einer erfindungsgemäßen Getriebevorrichtung in einer ersten Einbausituation;
- Figur 2: eine seitliche Aufsicht auf eine zweite Ausfütuungsform einer erfindungsgemäßen Getriebevorrichtung in einer zweiten Einbausituation;
- Figur 3: eine seitliche Aufsicht auf eine dritte Ausführungsform einer erfindungsgemäßen Getriebevorrichtung in einer dritten Einbausituation; und
- Figur 4: eine Querschnittsansicht einer vierten Ausfiihrungsform einer erfindungsgemäßen Getriebevorrichtung.

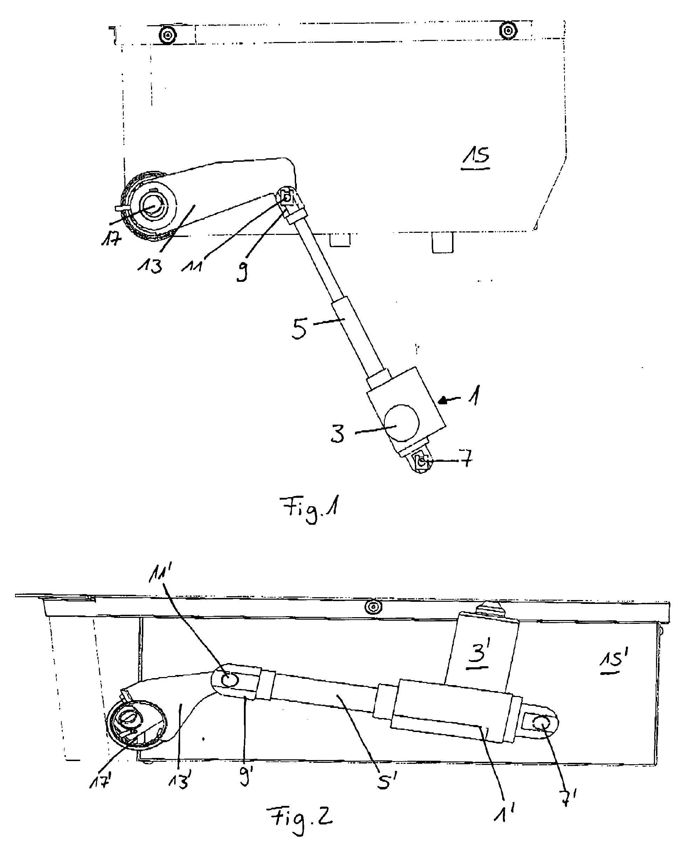

Die erfindungsgemäße Getriebevorrichtung ist insbesondere dazu geeignet, um zur Bewegung eines Bauteils und/oder eine Baugruppe eines Nahrungsmittelbehandlungsgeräts, wie eines Gargeräts, insbesondere eines Tiegelgargeräts, eingesetzt zu werden. In Figur 1 ist eine erste Einbausituation einer erfindungsgemäßen Getriebevorrichtung 1 dargestellt, Die Getriebevorrichtung 1 weist einen Getriebeeingang auf, an den eine Drehbewegung einer motorischen Antriebseinheit in Form eines Elektromotors 3 angelegt wird. Wie später erläutert werden wird, wird die mittels des Elektromotors 3 an die Getriebevorrichtung 1 angelegte Drehbewegung in der Getniebevotrichtung 1 in eine Hubbewegung eines Hubzylinders 5 ungewandelt.

In der in Figur 1 dargestellten Einbausituation der Getriebevorrichtung 1 ist der Hubzylinder 5 einseitig an einem Verbindungspunkt 7 drehbar an einem nicht dargestellten Gehäuse eines Tiegelgargeräts angebracht, während an dem dem Verbindungspunkt 7 gegenüberliegenden Ende des Hubzylinders 5 eine Verbindungsvorrichtung 9 angeordnet ist, die an einem Verbindungspunkt 11 mit einem Hebelarm 13, der drehmitnahmesicher mit einem Tiegel 15 des Gargeräts verbunden ist, angeschlossen ist.

Mittels der Hubbewegung des Hubzylinders 5 kann der Tiegel 15 um eine Drehachse 17 verschwenkt werden, insbesondere um in dem Tiegel 15 vorhandenes Fluid auszugießen.

Beispielsweise wird ein Tiegel eines Gargeräts ca. 60.000 mal, während einer Betriebszeit des Gargeräts von 10 Jahren bewegt, wobei bei einem Heben beispielsweise Kräfte von 6.000 Newton auftreten, während eine Kraft beim Senken ca. 220 Newton beträgt. Die erfindungsgemäße Getriebevorrichtung 1 erlaubt einen wartungsfreien Betrieb des Antriebs während dieser Betriebszeit.

Insbesondere aus Sicherheitsgründen ist es wichtig, dass in dem Fall, in dem unter dem Tiegel 15 ein Hindernis bei einem Zurückschwenken des Tiegels vorhanden ist, eine Bewegung des Hubzylinders 5 sofort unterbunden wird. Wie später erläutert werden wird, wird dies mittels der erfindungsgemäßen Getriebevorrichtung 1 durch ein Auskuppeln erreicht. Um eine ausreichend schnelles Bewegen des Tiegels 15 zu ermöglichen, ist eine Hubgeschwindigkeit von 5 mm pro Sekunde des Hubzylinders 5 vorteilhaft.

In Figur 2 ist eine zweite Einbausituation einer erfindungsgemäßen Getriebevorrichtung 1' dargestellt. Die Elemente in Figur 2, die denjenigen des in Figur 1 dargestellten Ausführungsbeispiels entsprechen, tragen die gleichen Bezugszeichen, allerdings einfach gestrichen. Im Gegensatz zu der in Figur 1 dargestellten Einbausituation einer erfindungsgemäßen Getriebevornchtung 1, bei der im Wesentlichen eine vertikale Einbaulage des Hubzylinders 5 vorliegt, liegt bei der in Figur 2 dargestellten Einbausituation der Getriebevorrichtung 1' eine im Wesentlichen horizontale Einbaulage vor.

Auch bei der in Figur 2 dargestellten Einbausituation sind für ein Heben des Tiegels 15' Kräfte im Bereich von ca. 3.000 Newton notwendig, während für ein Senken des Tiegels 15' Kräfte im Bereich von ca. 220 Newton notwendig sind. Für ein schnelles Heben, Senken bzw. Kippen des Gartiegels 15' sind ebenfalls Bewegungsgeschwindigkeiten von 5 mm pro Sekunde, die durch den Hubzylinder 5' erreicht werden, wünschenswert.

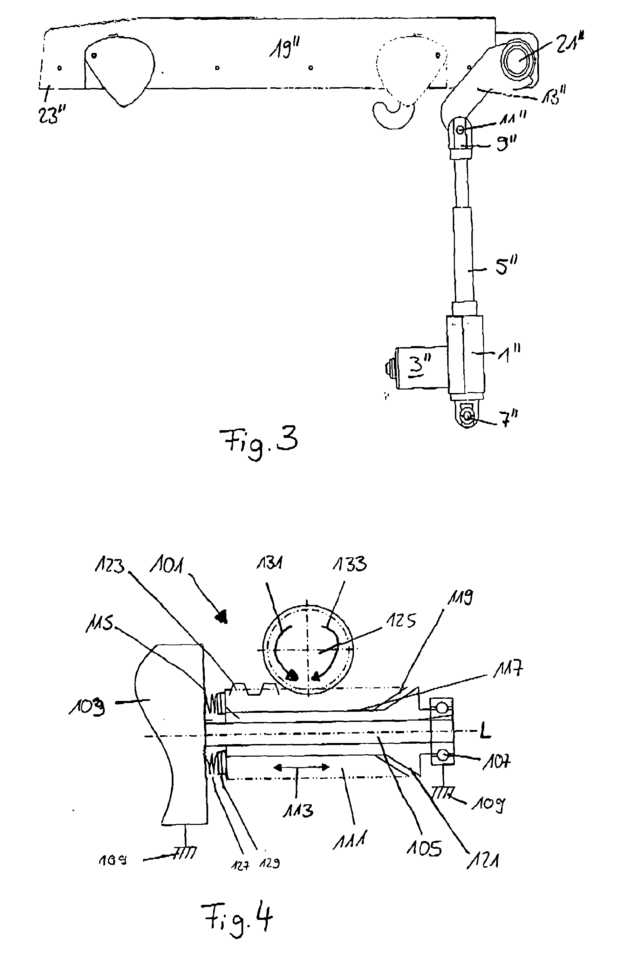

Der Einsatz einer erfindungsgemäßen Getriebevorrichtung ist jedoch nicht auf das Bewegen bzw. Aktuieren eines Tiegels eines Gargeräts beschränkt. So ist in Figur 3 eine dritte Einbausituation einer erfindungsgemäßen Getriebevorrichtung 1" dargestellt. Die Elemente, die denjenigen der in Figur 1 dargestellten Einbausituation entsprechen, tragen die gleichen Bezugszeichen, allerdings zweifach gestrichen. Im Gegensatz zu den in Figur 1 und 2 dargestellten Einbausituationen dient der Hubzylinder 5" nicht zur Aktuierung bzw. Bewegung eines Tiegels, sondern zur Bewegung eines Tiegeldeckels 19" um eine Drehachse 21".

Auch in dieser Einbausituation muss der Hubzylinder 5" üblicherweise bei einer Betriebszeit von 10 Jahren ca. 60.000 Hübe ausführen, wobei bei der in Figur 3 dargestellten vertikalen Einbausituation des Hubzylinders 5" Kräfte im Bereich von ca. 4.040 Newton für ein Öffnen bzw. Heben des Deckels 19" notwendig sind, während für ein Schließen bzw. Senken ca. Kräfte von 220 Newton im Bereich der Getriebevorrichtung 1" bzw, Elektromotor 3" auftreten. Um ein Entkuppeln des Hubzylinders 5" von dem Elektromotor 3" bei einem Senken des Tiegeldeckels 19" zu erreichen, insbesondere um einen Einklemmschutz, beispielsweise an einer Deckelforderkante 23", zu erreichen, muss die Getriebevorrichtung 1" bei einer Kraft von ca. 25,5 Newton plus der durch das Eigengewicht des Deckels 19" entstehenden Kraft reagieren, insbesondere ein verlässliches Auskuppeln sicherstellen.

In dieser Einbausituation sollten mittels des Hubzylinders 5" Hubgeschwindigkeiten von ungefähr 8mm pro Sekunde erreicht werden.

In Figur 4 ist eine Schnittansicht einer erfindungsgemäßen Getriebevorrichtung 101 dargestellt, die insbesondere in den Einbausituationen, wie sie in den Figuren 1 bis 3 dargestellt ist, eingesetzt werden kann. Die Getriebevorrichtung 101 dient zur Verbindung einer motorischen Antriebseinheit in Form eines Elektromotors 103 mit einem nicht dargestellten Hubzylinder. Ein Getriebeeingang der Getriebevorrichtung 101 wird durch eine Antriebswelle 105, die einseitig mit dem Elektromotor 103 verbunden ist und auf der gegenüberliegenden Seite in einem Kugellager 107 gelagert ist, gebildet. Sowohl ein Gehäuse des Elektromotors 103 als auch das Kugellager 107 stehen mit einem nicht weiter dargestellten Gehäuse 109 in Verbindung.

Konzentrisch zu der Antriebswelle 105 ist ein erstes Übertragungselement in Form einer Zylinderschnecke 111 bzw. eines Schraubrads angeordnet. Wie durch die Pfeile 113 angedeutet, ist die Zylinderschnecke 111 entlang einer Längsachse L der Antriebswelle 105 bewegbar gelagert.

Zur Übertragung einer Bewegung der Antriebswelle 105 auf die Zylinderschnecke 111 ist vorgesehen, dass auf der Antriebswelle 105 ein zweites Übertragungselement in Form einer Kupplungshülse 115 angeordnet ist. Die Kupplungshülse 115 ist insbesondere mit der Oberfläche der Antriebswelle 105 verklebt.

Zwischen der Zylinderschnecke 111 und der Kupplungshülse 115 ist ein in Figur 4 nicht weiter dargestelltes Lagerelement 117 angeordnet. Darüber hinaus weist die Zyliriderschnecke 111 eine erste Kupplungsfläche 119 und die Kupplungshülse 115 eine zu der ersten Kupplungsfläche 119 komplementäre zweite Kupplungsfläche 121 auf. Die Kontur der zweiten Kupplungsfläche 121 ist insbesondere konisch ausgebildet. Um einen Verschleiß zu vermeiden, zumindest zu reduzieren, sind die Oberflächen der Kupplungsflächen 119, 121 gehärtet. Dies wird vorzugsweise durch eine Beschichtung der Oberflächen erreicht, beispielsweise einer Beschichtung, die eine polymere Kunststoffverbindung umfasst.

Durch eine Bewegung der Zylinderschnecke 111 in die durch die Pfeile 113 angedeuteten Richtungen kann die Zylinderschnecke 111 durch ein in Kontaktbringen der ersten Kupplungsfläche 119 mit der zweiten Kupplungsfläche 121 eine drehmitnahmesichere Verbindung mit der Antriebswelle 105 bzw. der Kupplungshülse 115 eingehen. In dieser ersten Position der Zylinderschnecke 111, in der sich die Kupplungsflächen 119, 121 kontaktieren, führt eine Drehung der Antriebswelle 105 zu einer Drehung der Zylinderschnecke 111, die über ein auf der Zylinderschnecke 111 ausgebildetes Gewinde 123 an ein nicht dargestelltes drittes Übertragungselement eines Hubzylinders übertragen wird. Dazu greift in das Gewinde 123 eine viertes Übertragungselement in Form eines Schneckenrads 125 ein. Die Drehbewegung des Schneckrads 125 wird dann in eine Hubbewegung des dargestellten Hubzylinders umgewandelt, insbesondere mittels des auf dem Schneckenrad 125 angeordneten dritten Überragungselements wie einer Gewindehülse.

In Figur 4 ist die Getriebeanordnung in einer ausgekuppelten Position dargestellt, in der sich die Zylinderschnecke 111 in einer zweiten Position, in der die Kupplungsflächen 119, 121 nicht in Verbindung stehen, befindet. In dieser Position der Zylinderschnecke 111 wird über das Lagerelement 117 sichergestellt, dass keine weitere Kraftübertragung von der Antriebswelle 105 bzw. der Kupplungsfläche 121 auf die Zylinderschnecke 111 bzw. das Schneckenrads 125 erfolgt. Es kommt somit zu einer kompletten mechanischen Entkopplung zwischen dem Getriebeeingang und dem Getriebeausgang der Getriebevorrichtung 101.

Erfindungsgemäß wird die Zylinderschnecke 111 durch ein Federelement in Form eines Tellerfederpakets 127 aus der in der Figur 4 dargestellten Position in die erste Position, in der die Kupplungsflächen 119, 121 in Kontakt stehen, gedrängt. Um ein Verschleißen des Tellerfederpakets 127 zu vermeiden, stützt sich das Tellerfederpaket 127 direkt an einem Gehäuse des Elektromotors 103 ab und wird über eine Axiallagervorrichtung 129 von der Zylinderschnecke 111 drehmechanisch getrennt, so dass das Tellerfederpaket 127 mit dem Gehäuse des Elektromotors 103 stillsteht, also verdrehsicher zu diesem gelagert ist. Das Federelement bleibt also bei einer Drehung des ersten Übertragungselements, insbesondere relativ zu einer Tragstruktur der Getriebevorrichtung 101, wie dem Gehäuse des Elektromotors 103, stillstehen und dreht sich nicht mit dem ersten Übertragungselement. Diese Axiallagervorrichtung 129 erlaubt eine Drehbewegung der Tellerfedern relativ zu dem Gehäuse des Elektromotors 103 und kann beispielsweise ein Kugellager, einen Reibungsring, eine Magnetplatte oder dergleichen umfassen.

Es könnte auch auf den Einsatz des Tellerfederpakets 127 verzichtet werden. So müsste dann jedoch sichergestellt werden, dass auch in der zweiten Position der Zylinderschnecke 111, in der die Kupplungsflächen 119 und 121 voneinander getrennt sind, eine geringe Drehmomentübertragung von der Antriebswelle 105 auf die Zylinderschnecke 111 erfolgt. So könnte die Zylinderschnecke 111 durch einen Reibschluss, beispielsweise mittels Fett oder einen O-Ring, mit der Antriebswelle 105 reibschlüssig in Wirkverbindung stehen, um auch in der Entkupplungsposition ein Drehmoment auf die Zylinderschnecke 111 zu übertragen. Derartige Maßnahmen führen jedoch dazu, dass sich die Reibpaarungseigenschaften zwischen der Zylinderschnecke 111 und der Antriebswelle 105 aufgrund der Bauteiltoleranzen sehr stark unterscheiden können und sich aufgrund der Veränderung der für den Reibschluss eingesetzten Materialen im Laufe der Betriebszeit der Getriebevorrichtung sehr stark verändern können. Weiterhin könnte der Reibschluss zur Übertragung eines Anlaufimoments zu einer weiteren Kraftübertragung auf die einzelnen Elemente der Getriebevrrichtung, auch in einem Zustand, in dem Kupplungsflächen nicht miteinander in Berührung sind, führen, was zu einem zusätzlichen Verschleiß führen könnte. Ein derartiger Kupplungsaufbau könnte also zu erhöhten Verschleißschwierigkeiten führen, ein sicheres Einkuppeln nicht garantieren und zu starken Schwankungen aufgrund der Bauteiltoleranzen der Sehleiflcupplung führen. Daher ist der Einsatz der Tellerfederpakete 127 und der Einsatz des Lagerelements 117 bevorzugt.

Im Folgenden wird nun die Funktionsweise der Getriebevorrichtung 101 erläutert. In der als Zylinderschneckengetriebe bzw. Schneckenradsystem ausgebildeten Getriebevorrichtung 101 ist, wie nachfolgend erläutert wird, ein Überlastungs- bzw. Einklemmschutz integriert. Wie zuvor ausgeführt, ist die Zylinderschnecke 111 verschiebbar auf der Motorwelle 105 angeordnet und greift in das Schneckenrad 125 ein. Eine Kraftübertragung zwischen der Motorwelle 105 und der Zylinderschnecke 111 erfolgt über die konusförmigen Kupplungsflächen 119, 121, wobei sich die Kupplungsfläche 121 immer mit der Antriebswelle 105 des Motors 103 dreht.

Soll mittels des Elektromotors 103 bzw. des Hubzylinders ein Element bzw. Baugruppe bewegt werden, beispielsweise der Tiegel 15, 15' oder der Tiegeldeckel 19", indem das Schneckenrad 125 in die durch den Pfeil 131 angedeutete Drehrichtung gedreht wird, so wird die Zylinderschnecke 111 bedingt durch die Drehrichtung 131 und den Kraftverlauf innerhalb der Getriebevorriehtung 101 auf den Konus bzw. die Kupplungsfläche 121 gedrückt, so dass ein Einkupplung zwischen der Antriebswelle 105 und der Zylinderschnecke 111 erzeugt wird. Ein Motordrehmoment wird dann über den Konus von der Antriebswelle 105 auf das Schneckenrad 125 übertragen und so eine Bewegung des Hubzylinders erreicht.

Durch den Pfeil 133 ist eine Drehrichtung des Schneckenrads 125 bei einer entgegengesetzten Bewegung, beispielsweise bei einem Senken des Tiegels 15, 15' oder Schließen des Deckels 19", angedeutet. Kommt es bei dieser Bewegung zu einer äußeren Krafteinwirkung auf den Hubzylinder, beispielsweise durch ein Verklemmen des Bauelements oder ein Einklemmen eines Gegenstands unterhalb des Bauelements, wird eine Kraft auf die Getriebevorrichtung 1 übertragen, beispielsweise wenn der Deckel 19" oder der Tiegel 15, 15' beim Senken auf ein Widerstand trifft. Durch diese Krafteinwirkung wird das Schneckenrad 125 zum Stillstand gebracht und das Zylinderschneckenrad 111 schraubt sich zwangsweise durch die entgegengesetzte Drehrichtung der Antriebswelle 105 und den umgedrehten Kraftverlauf auf der stillstehenden Verzahnung der Zylinderschnecke 111 in Richtung des Motors 103 gegen die Kraft des Federelements 127.

Dadurch dass die Zylinderschnecke 111 sich von dem Konus wegbewegt und somit eine Verbindung zwischen den Kopplungsflächen 119 und 121 gelöst wird, wird kein Drehmoment mehr von der Antriebswelle 105 auf die Zylinderschnecke 111 bzw. das Schneckenrad 125 übertragen.

Wird der Widerstand anschließend gelöst, so bewirkt das Tellerfederpaket 127, dass die Zylinderschnecke 111 in Richtung der Kupplungsfläche 121 bewegt wird, so dass eine weitere Kraftübertragung von dem Elektromotor 103 auf den Hubzylinder erreicht wird.

Neben der verlässlichen Auskupplung im Falle eines von außen anliegenden Widerstandes wird durch die Getriebevorrichtung 101 auch ein übermäßiger Verschleiß der Elemente der Getriebevorrichtung bei Erreichen einer Endposition des Bauelements bzw. Baugruppe verhindert. Während für den Großteil der Bewegung, d.h. ein Heben oder Senken beispielsweise des Tiegels 15, 15' oder des Deckels 19", die Federelemente 127 bewirken, dass ein Einkuppeln der Zylinderschnecke 111 und der Antriebswelle 105 erreicht wird, wird am Ende eines Senkvorgangs das Schneckenrad 125 ebenfalls blockiert. Aufgrund der Trägheit der Zylinderschnecke 111 und der Antriebswelle 105 drehen sich diese Elemente jedoch noch weiter, wobei jedoch eine Kraftübertragung auf das stehende Schneckenrad 125 dadurch vermieden wird, dass sich die Zylinderschnecke 111 in Figur 4 nach links gegen die Kraft des Tellerfederpakets 127 bewegt. Das Tellerfederpaket 127 wirkt wie ein Puffer und nach einem Stillstands des Motors, der üblicherweise erst nach einer gewissen Zeitspanne erreicht wird, bewirkt das Tellerfederpaket 127, dass das Zylinderschneckenrad 111 wieder gegen den Konus und somit die Kupplungsfläche 121 gedrückt wird und so eine Einkupplung erreicht wird. Die Motorabschaltung erfolgt über eine übliche Motorsteuerkomponente ohne zusätzliche, mit dem Getriebe wechselwirkende Aktorik oder Sensorik.

Die Erfindung liefert somit eine Getriebevorrichtung, die aufgrund einer rein mechanischen Wirkungsweise eine verlässliche Entkupplung von Antriebssträngen ermöglicht, wodurch eine Überbelastung von Einzelelementen, die zu einem vorzeitigen Verschleiß der Elemente führen kann, vermieden wird und gleichzeitig eine erhöhte Betriebssicherheit bei einem weniger komplexen Aufbau ermöglicht wird. Insbesondere ist die erfindungsgemäße Lösung sehr zuverlässig und mit einem Minimum, an einfachen, bekannten Bauteilen, die damit kostengünstig sind, realisierbar. Das System reagiert sehr schnell, da die Federelemente, insbesondere das Tellerfederpaket 127, immer unter Spannung ist und eine sehr kleine Trägheit aufweist. Alle diese Elemente erlauben eine Lebensdauer des Systems, welche deutlich höher ist als bei herkömmlichen Systemen.

Die in der vorstehenden Beschreibung, in den Ansprüchen sowie in den Figuren offenbarten Merkmale können sowohl einzeln als auch in beliebiger Kombination für die Verwirklichung der Erfindung in den verschiedenen Ausführungsformen wesentlich sein.

### Bezugszeichenvste

- 1,1',1": Getriebevorrichtung
- 3,3',3": Elektromotor
- 5,5',5": Hubzylinder
- 7,7',7": Verbindungspunkt
- 9,9',9": Verbindungsvorrichtung
- 11,11', 11": Verbindungspunkt
- 13,13',13": Hebelarm
- 15,15': Tiegel
- 17,17': Drehachse
- 19": Tiegeldeckel
- 21": Drehachse
- 23": Deckelvorderkante
- 101: Getricbevorrichtung
- 103: Elektromotor
- 105: Antriebswelle
- 107: Kugellager
- 109: Gehäuse
- 111: Zylinderschnecke
- 113: Pfeil
- 115: Kupplungshülse
- 117: Lagerelement
- 119: Kupplungsfläche
- 121: Kupplungsfläche
- 123: Gewinde
- 125: Schneckenrad
- 127: Tellerfederpaket
- 129: Axiallagervorrichtung
- 131: Drehrichtung
- 133: Drehrichtung

## Patentansprüche

1. Getriebevorrichtung (1, 1', 1", 101) zur Verbindung einer motorischen Antriebseinheit (3, 3', 3 ", 103) mit zumindest einem Hubzylinder (5, 5', 5"), umfassend zumindest eine drehmitnahmesicher mit der motorischen Antriebseinheit (3, 3', 3", 103) in Wirkverbindung stehende Antriebswelle (105) und
zumindest eine Übertragungsvomchtung (111, 115, 125) zur Umwandlung einer Drehbewegung der Antriebswelle (105) in eine Hubbewegung des Hubzylinders (5, 5', 5"), wobei die Übertragungsvorrichtung zumindest ein konzentrisch zu der Antriebswelle (105) angeordnetes erstes Übertragungselement (111) umfasst und das erste Übertragungselement (111) entlang einer Längsachse (L) der Antriebswelle (105) bewegbar gelagert ist, **dadurch gekennzeichnet, dass**
das erste Übertragungselement (111) in zumindest einer ersten Position im Wesentlichen drehmitnahmesicher mit der Antriebswelle (105) verbunden ist und in zumindest einer zweiten Position die drehmitnahmesichere Verbindung im Wesentlichen gelöst ist, und die Getriebevorrichtung (1, 1', 1", 101) zumindest ein Federelement (127) umfasst, wobei das erste Übertragungselement (111) mittels einer durch das Federelement (127) aufgebauten Kraft in die erste Position zwingbar ist.

2. Getriebevorrichtung nach Anspruch 1, **dadurch gekennzeichnet, dass**
die Übertragungsvorrichtung zumindest ein drehmitnahmesicher mit der Antriebswelle (105) verbundenes, insbesondere mit der Antriebswelle (105) verklebtes, verschweißtes, verschraubtes, kraftschlüssig verbundenes, formschlüssig verbundenes und/oder von der Antriebswelle (105) umfasstes, zweites Übertragungselement (115) umfasst.

3. Getriebevorrichtung nach Anspruch 1 oder 2, **gekennzeichnet durch**
zumindest eine mit dem ersten Übertragungselement (111) in Wirkverbindung stehende, an dem ersten Übertragungselement (111) ausgebildete und/oder von dem ersten Übertragungselement umfasste erste Kupplungsfläche (119) und eine mit der Antriebswelle (105) und/oder dem zweiten Übertragungselement (115) in Wirkverbindung stehende, an der Antriebswelle und/oder dem zweiten Übertragungselement (115) ausgebildete und/oder von der Antriebswelle und/oder dem zweiten Übertragungselement umfasste zweite Kupplungsfläche (121), wobei insbesondere die erste Kupplungsfläche (119) und die zweite Kupplungsfläche (121) komplementäre Obefflächenformen, Oberflächenkonturen und/oder Oberflächenneigungen aufweisen, vorzugsweise die erste Kupplungsfläche (119) und/oder die zweite Kupplungsfläche (121) zumindest bereichsweise im Wesentlichen senkrecht zu der Längsachse der Antriebswelle verläuft bzw. verlaufen und/oder zumindest bereichsweise geneigt relativ zu der Längsachse (L) der Antriebswelle (105) verläuft bzw. verlaufen und/oder eine im Wesentlichen konische, elliptische, kreissegmentförmige und/oder spiralförmige Oberflächenkontur aufweist bzw. aufweisen.

4. Getriebevorrichtung nach Anspruch 3, **dadurch gekennzeichnet, dass**
die erste Kupplungsfläche (119) und die zweite Kupplungsfläche (121) in der ersten Position des ersten Übertragungselements (111) miteinander in Kontakt stehen und in der zweiten Position des ersten Übertragungselements (111) voneinander beabstandet sind.

5. Getriebevorrichtung nach Anspruch 3 oder 4, **dadurch gekennzeichnet, dass**
die erste Kupplungsfläche (119) und/oder die zweite Kupplungsfläche (121) eine gehärtete Oberfläche aufweist bzw. aufweisen, insbesondere die Oberfläche durch eine Beschichtung, vorzugsweise umfassend eine Keramik, eine, insbesondere polymere, Kunststoffverbindung und/oder eine kohlenstoffhaltige Verbindung, und/oder eine Randschichthärtung, vorzugsweise umfassend eine thermische Behandlung, eine Laserbehandlung, eine Nitrierhärtung und/oder induktives Härten, gehärtet ist.

6. Getriebevornchtung nach einem der vorangehenden Ansprüche, **gekennzeichnet durch** zumindest eine zwischen der Antriebswelle (105) und/oder dem zweiten Übertragungselement (115) einerseits und dem ersten Übertragungselement (111) andererseits angeordnetes Lagerelement (117), wobei das Lagerelement (117) zumindest ein Gleitlager, Wälzlager, Kugellager, Walzenlager, Nadellager, Reiblager und/oder Rollenlager umfasst.

7. Getriebevorrichtung nach einem der vorangehenden Ansprüche, **dadurch gekennzeichnet, dass**
das erste Übertragungselement (111) zumindest eine erste Mitnahmevorrichtung (123) für zumindest ein drittes Übertragungselement umfasst, insbesondere die Mitnahmevorrichtung zumindest ein auf einer Oberfläche des ersten Übertragungselements (111) zumindest bereichsweise ausgebildetes Außengewinde (123) umfasst, vorzugsweise das erste Übertragungselement als Zylinderschnecke (111) und/oder Schraubrad ausgebildet ist.

8. Getriebevorrichtung nach Anspruch 7, **dadurch gekennzeichnet, dass**
mittels des dritten Übertragungselements eine Drehbewegung des ersten Übertragungselementes (111) in die Hubbewegung des Hubzylinders (5, 5', 5") umwandelbar ist, vorzugsweise das dritte Übertragungselement zumindest eine mit dem Hubzylinder (5, 5', 5") in Wirkverbindung stehende, insbesondere relativ zu dem Hubzylinder (5, 5', 5") verdrehsicher gelagerte, erste Gewindehülse umfasst.

9. Gefiebevorrichtung nach Anspruch 8, **dadurch gekennzeichnet, dass**
das dritte Übertragungselement, insbesondere die Gewindehülse, direkt mittels der ersten Mitnahmevorrichtung bewegbar ist und/oder eine Bewegung des ersten Übertragungselements (111) mittels der ersten Mitnahmevorrichtung (123) auf zumindest ein viertes Übertragungselement, insbesondere ein Schneckenrad (125), übertragbar ist und eine Bewegung des vierten Übertragungselements (125) an das dritte Übertragungselement, insbesondere mittels einer mit dem vierten Übertragungselement in Wirkverbindung stehenden und/oder von dem vierten Übertragungselement umfassten zweiten Mitnahmevorrichtung, übertragbar ist, wobei vorzugsweise eine Drehachse des vierten Übertragungselements (125) senkrecht zu der Längsachse (L) der Antriebswelle (105) verläuft.

10. Getriebevorrichtung nach einem der vorangehenden Anspruch, **dadurch gekennzeichnet, dass**
das Federelement (127) sich auf einer ersten Seite, insbesondere unter Zwischenschaltung zumindest einer ersten Axiallagervorrichtung (129), an dem ersten Übertragungselement (111) abstützt und sich an einer, insbesondere der ersten Seite gegenüberliegenden, zweiten Seite, vorzugsweise drehsicher, an zumindest einer von der Antriebswelle (105) drehmechanisch entkoppelten Struktur der Getriebevorrichtung, insbesondere einem Gehäuse der Antriebseinheit (103), und/oder, insbesondere unter Zwischenschaltung zumindest einer zweiten Axiallagervorrichtung, an zumindest einem mit der Antriebswelle (105) und/oder dem zweiten Übertragungselement (115) in Wirkverbindung stehenden, vorzugsweise umfassten, ersten Widerlager abstützt und/oder das Federelement auf zumindest einer dritten Seite, insbesondere unter Zwischenschaltung zumindest einer dritten Axiallagervorrichtung, mit dem ersten Übertragungselement verbunden ist und auf einer, insbesondere der dritten Seite gegenüberliegenden, vierten Seite, vorzugsweise drehsicher, mit der von der Antriebswelle drehmechanisch entkoppelten Struktur der Getriebevorrichtung, insbesondere dem Gehäuse der Antriebseinheit, und/oder, insbesondere unter Zwischenschaltung zumindest einer vierten Axiallagervoffichtung, mit zumindest einem mit der Antriebswelle und/oder dem zweiten Übertragungselement in Wirkverbindung stehenden, zweiten Widerlager verbunden ist.

11. Getriebevorrichtung nach Anspruch 10, **dadurch gekennzeichnet, dass**
die erste Axiallagervorrichtung (129), die zweite Axiallagervorrichtung, die dritte Axiallagervorrichtung und/oder die vierte Axiallagervorrichtung zumindest ein Gleitlager, Wälzlager, Kugellager, Reiblager, Magnetlager, Nadellager, Rollenlager und/oder Walzenlager umfasst bzw. umfassen.

12. Getriebevorrichtung nach einem der vorangehenden Ansprüche, **dadurch gekennzeichnet, dass**
das erste Übertragungselement (111) mittels des Federelementes (127) in die erste Position ziehbar und/oder drückbar ist und/oder das Federelement zumindest eine Tellerfeder (127), zumindest eine Schraubenfeder, zumindest eine Schraubendruckfeder, zumindest eine Schraubenzugfeder, zumindest eine Druckfeder, zumindest eine Gummifeder, zumindest eine Elastomerfeder und/oder zumindest eine Hybridfeder umfasst.

13. Getriebevorrichtung nach einem der vorangehenden Ansprüche, **dadurch gekennzeichnet, dass**
die motorische Antriebseinheit zumindest einen Elektromotor (3, 3', 3", I03), zumindest eine pneumatische Antriebseinheit und/oder zumindest eine hydraulische Antriebseinheit umfasst.

14. Verfahren zur automatischen wahlweisen Herstellung oder Lösung einer Verbindung zwischen einer motorischen Antriebseinheit (3, 3', 3", 103) und einem Hubzylinder (5, 5', 5"), insbesondere unter Einsatz einer Getriebevorrichtung (1, 1', 1", 101) nach einem der vorangehenden Ansprüche, wobei
eine Drehbewegung der motorischen Antriebseinheit (3, 3', 3", 103) auf zumindest eine drehmitnahmesicher mit der motorischen Antriebseinheit (3, 3', 3", 103) in Wirkverbindung stehenden Antriebswelle (105) übertragen wird,
die Drehbewegung mittels zumindest einer Übertragungsvorrichtung (111, 115, 125) in eine Hubbewegung des Hubzylinder (5, 5', 5", 105) umgewandelt wird,
ein konzentrisch zu der Antriebswelle (105) angeordnetes und entlang einer Längsachse (L) der Antriebwelle (105) bewegbar gelagertes erstes Übertragungselement (111) der Übertragungsvorrichtung in einer ersten Position im Wesentlichen drehmitnahmesicher mit der Antriebswelle (105) verbunden wird,
in zumindest einer zweiten Position des ersten Übertragungselements (111) die drehmitnahmesichere Verbindung im Wesentlichen gelöst wird, und
das erste Übertragungselement (111) mittels einer durch zumindest ein Federelement (127) aufgebauten Kraft in seine erste Position gezwungen wird.

15. Verfahren nach Anspruch 14, **dadurch gekennzeichnet, dass**
das erste Übertragungselement (111) in die zweite Position bewegt wird, wenn eine durch den Hubzylinder (5, 5', 5",105) auf die Übertragungsvorrichtung aufgebaute und/oder einer Bewegung der motorischen Antriebseinheit (3, 3', 3", 103) entgegenwirkende Gegenkraft einen Schwellenwert übersteigt, wobei der Schwellenwert, vorzugsweise durch eine Federkonstante des Federelements (127) eingestellt wird.

16. Verfahren nach Anspruch 14 oder 15, **dadurch gekennzeichnet, dass**
in der ersten Position zumindest eine mit dem ersten Übertragungselement (111) in Wirkverbindung stehende erste Kupplungsfläche (119) mit zumindest einer mit der Antriebswelle (105) und/oder einem zweiten Übertragungselement (115) in Wirkverbindung stehenden zweiten Kupplungsfläche (121) in Verbindung, insbesondere in direkten Kontakt, gebracht wird.

17. Verfahren nach einem der Ansprüche 14 bis 16, **dadurch gekennzeichnet, dass**
mittels des Hubzylinders (5, 5', 5") zumindest ein Element und/oder eine Baugruppe eines Nahrungsmittelbehandlungsgeräts aktuiert wird.

18. Nahrungsmittelbehandlungsgerät, **gekennzeichnet durch**
zumindest eine Getriebevorrichtung (1, 1', 1", 101) nach einem der Ansprüche 1 bis 13.

19. Nahrungsmittelbehandlungsgerät nach Anspruch 18, **dadurch gekennzeichnet, dass**
das Nahrungsmittelbehandlungsgerät in Form zumindest eines Gargeräts, zumindest eines Standgargeräts, zumindest eines Kombidämpfers, zumindest eines Kesselgargeräts und/oder zumindest eines Tiegelgargeräts ausgebildet ist.

20. Nahrungsmittelbehandlungsgerät nach Anspruch 18 oder 19, **dadurch gekennzeichnet, dass**
mittels der Getriebevorrichtung (1, 1', 1", 101) zumindest eine Baugruppe des Nahrungsmittelbehandlungsgeräts, wie ein Tiegel (15, 15'), ein Tiegeldeckel (19") und/oder eine Nahrungsmittelbehandlungsraumtür, bewegbar ist.
